# EUROPÄISCHE PATENTANMELDUNG

(11) **EP 1 566 909 A1**
(43) Veröffentlichungstag der Anmeldung: **24.08.2005**
(21) Anmeldenummer: 04004019.8
(22) Anmeldetag: 23.02.2004
(51) Int. Cl.: H04J 13/04, H04Q 7/38

(54) **Verfahren und Einrichtung zur Funkkommunikation in Abwärtsrichtung unter Verwendung von nicht-orthogonalen Kodes**

(71) Anmelder: SIEMENS AKTIENGESELLSCHAFT, 80333 München (DE)
(72) Erfinder: Charpentier, Frédéric, 10115 Berlin (DE)

(57) **Zusammenfassung**

Die Erfindung betrifft ein Verfahren zur Kommunikation per Funk zwischen einer Basisstation (ES) und Teilnehmerstationen (MS1, MS2, MS3) eines Funkkommunikationssystems. Von der Basisstation (BS) werden an Teilnehmerstationen (MS1, MS2, MS3) unter Verwendung von teilnehmerstationsspezifischen Codes (CODE1, CODE2, CODE3) Nachrichten umfassend Datenbits und/oder Signalisierungsbits gesendet. Gleichzeitig wird für Nachrichten an eine erste Teilnehmerstation (MS1) ein erster Code (CODE1) und für Nachrichten an eine zweite Teilnehmerstation (MS2, MS3) ein zweiter zu dem ersten Code (CODE1) nicht-orthogonaler Code (CODE2, CODE3) verwendet. Erfindungsgemäß beinhaltet mindestens eine von der Basisstation (BS) an die erste Teilnehmerstation (MS1) unter Verwendung des ersten Codes (CODE1) gesendete Nachricht bei gleicher Gesamtbitanzahl mehr Signalisierungsbits und weniger Datenbits als mindestens eine von der Basisstation (BS) an die zweite Teilnehmerstation (MS2, MS3) unter Verwendung des zweiten Codes (CODE2, CODE3) gesendete Nachricht. Weiterhin betrifft die Erfindung eine netzseitige Einrichtung (BS) zur Durchführung des Verfahrens.

## Beschreibung

Die Erfindung betrifft ein Verfahren zur Kommunikation per Funk zwischen einer Basisstation und Teilnehmerstationen eines Funkkommunikationssystems, wobei die Basisstation bei der Versendung von Nachrichten teilnehmerspezifische Codes verwendet. Weiterhin betrifft die Erfindung eine netzseitige Einrichtung in einem Funkkommunikationssystem zur Durchführung des Verfahrens.

In Funkkommunikationssystemen werden Nachrichten umfassend Datenbits wie Sprache, Bildinformation, Videoinformation, Textnachrichten, Multimedianachrichten, und/oder Signalisierungsbits mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen und netzseitig um Basisstationen handeln. In einem Mobilfunkkommunikationssystem handelt es sich bei zumindest einem Teil der Teilnehmerstationen um mobile Teilnehmerstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur, bestehend u.a. aus Basisstationen, Einrichtungen zur Kontrolle und Steuerung der Basisstationen, Einrichtungen zur Funkzugangskontrolle und weiteren netzseitigen Einrichtungen ausgebildet.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Teilnehmerstationen aufgeteilt werden. Auch Kombinationen von Vielfachzugriffsverfahren sind möglich, wie z.B. die Kombination eines Frequenzbereichs-Vielfachzugriffsverfahrens mit einem Codebereichs-Vielfachzugriffsverfahren.

Bei Codebereichs-Vielfachzugriffsverfahren werden für die Kommunikation von Teilnehmerstationen teilnehmerspezifische Codes verwendet, so dass in Abwärtsrichtung die jeweilige Teilnehmerstation bzw. in Aufwärtsrichtung netzseitige Einrichtungen die Nachrichten an die bzw. von der Teilnehmerstation von den Nachrichten an bzw. von anderen Teilnehmerstationen unterscheiden können, indem eine Korrelation zwischen dem empfangenen Signal und dem teilnehmerspezifischen Code durchgeführt wird. Werden orthogonale teilnehmerspezifische Codes verwendet, so ist eine vollständige Trennung der Signale von bzw. an verschiedene Teilnehmerstationen möglich. Werden hingegen nicht-orthogonale teilnehmerspezifische Codes verwendet, so können die jeweiligen Signale nicht vollständig getrennt werden, so dass ein unter Verwendung eines ersten teilnehmerspezifischen Codes gesendetes Signal an eine bzw. von einer Teilnehmerstation in Bezug auf ein Signal einer Teilnehmerstation, welches unter Verwendung eines zweiten, zu dem ersten teilnehmerspezifischen Code nicht-orthogonalen teilnehmerspezifischen Codes gesendet wird, ein Störsignal darstellt.

Der Erfindung liegt die Aufgabe zugrunde, ein Verfahren zur Kommunikation per Funk aufzuzeigen, welches berücksichtigt, dass zur Kommunikation zwischen einer Basisstation und Teilnehmerstationen eines Funkkommunikationssystems für zumindest manche Teilnehmerstationen nicht-orthogonale teilnehmerspezifische Codes verwendet werden. Weiterhin soll eine geeignete netzseitige Einrichtung eines Funkkommunikationssystems zur Durchführung des Verfahrens vorgestellt werden.

Diese Aufgabe wird hinsichtlich des Verfahrens durch ein Verfahren mit den Merkmalen des Anspruchs 1 gelöst.

Vorteilhafte Ausgestaltungen und Weiterbildungen sind Gegenstand von Unteransprüchen.

In dem Verfahren zur Kommunikation per Funk zwischen einer Basisstation und Teilnehmerstationen eines Funkkommunikationssystems werden von der Basisstation an Teilnehmerstationen unter Verwendung von teilnehmerstationsspezifischen Codes Nachrichten umfassend Datenbits und/oder Signalisierungsbits gesendet. Gleichzeitige wird für Nachrichten an eine erste Teilnehmerstation ein erster Code und für Nachrichten an eine zweite Teilnehmerstation ein zweiter zu dem ersten Code nicht-orthogonaler Code verwendet. Erfindungsgemäß beinhaltet mindestens eine von der Basisstation an die erste Teilnehmerstation unter Verwendung des ersten Codes gesendete Nachricht bei gleicher Gesamtbitanzahl mehr Signalisierungsbits und weniger Datenbits als mindestens eine von der Basisstation an die zweite Teilnehmerstation unter Verwendung des zweiten Codes gesendete Nachricht.

Bei der Basisstation handelt es sich um einen netzseitigen Funkzugangspunkt des Funkkommunikationssystems, mit dem Teilnehmerstationen kommunizieren können. Eine Basisstation kann in verschiedenen Systemen verschieden bezeichnet werden, so z.B. in UMTS als NodeB und in WLANs (Wireless Local Area Networks) als AP (Access Point). Bei den Datenbits kann es sich zum Beispiel um Sprache einer Sprachkommunikation des jeweiligen Teilnehmers, um eine Textnachricht, oder um vom Teilnehmer angeforderte Daten, zum Beispiel aus dem Internet, handeln. Die Signalisierungsbits können zum Beispiel zur Signalisierung einer Leistungsregelung verwendet werden, sie können Pilotbits zur Kanalschätzung umfassen, oder eine Angabe von Datenformaten beziehungsweise Anweisungen, wie Datenbits von der jeweiligen Teilnehmerstation nach dem Empfang zu verarbeiten sind. Die Verwendung von teilnehmerstationsspezifischen Codes kann aus der Verwendung von einem oder mehreren Codes bestehen, so zum Beispiel in UMTS aus der Verwendung eines Channelisation-Codes, d.h. eines Spreizcodes, und eines Scrambling-Codes. Nicht-orthogonale Codes sind in UMTS realisierbar durch die Verwendung von sogenannten Primary- und Secondary-Scrambling-Codes, jeweils in Kombination mit dem gleichen oder einem unterschiedlichen Spreizcode. Das erfindungsgemäße Verfahren kann neben der einen ersten und der einen zweiten Teilnehmerstation auch in Bezug auf mehrere Teilnehmerstationen durchgeführt werden.

Vorzugsweise haben die Nachrichten, welche die Basisstation unter Verwendung des ersten und des zweiten Codes an die Teilnehmerstationen sendet, den gleichen strukturellen Nachrichtenaufbau in Form einer Reihenfolge, in welcher Felder eines bestimmten Inhaltes aufeinanderfolgen. In UMTS zum Beispiel können diese Nachrichten aus Bits eines zeitgemultiplexten DL DPCCH (Downlink Dedicated Physical Control Channel) und DL DPDCH (Downlink Dedicated Physical Data Channel) bestehen. Die Bitanzahlen, das heißt die Gesamtbitanzahl, die Anzahl der Signalisierungsbits und die Anzahl der Datenbits, beziehen sich vorzugsweise auf Bits nach einer Kanalkodierung und vor einer Spreizung. Es ist jedoch auch möglich, dass sich die Anzahl der Bits auf die tatsächlich von der Basisstation gesendeten Bits bezieht, das heißt, nach einer gegebenenfalls durchgeführten Spreizung.

In Weiterbildung der Erfindung gehört der erste Code einer von der Basisstation aktuell weniger verwendeten Gruppe von Codes und der zweite Code einer von der Basisstation aktuell mehr verwendeten Gruppe von Codes an.

Es ist vorteilhaft, wenn die Verwendung des ersten Codes die Anwendung eines ersten Scrambling Codes und die Verwendung des zweiten Codes die Anwendung eines zweiten von dem ersten Scrambling Code unterschiedlichen Scrambling Codes umfasst. Dies kann in UMTS dadurch realisiert werden, dass es sich bei dem zweiten Scrambling Code um einen Primary Scrambling Code, und bei dem ersten Scrambling Code um einen Secondary Scrambling Code handelt. Vorteilhafterweise wird der Primary Scrambling Code für die meisten Teilnehmerstationen der Funkzelle der Basisstation eingesetzt. Der weniger benutzte Secondary Scrambling Code wird in diesem Fall vorzugsweise nur denjenigen Teilnehmerstationen zugewiesen, deren Nachrichten erfindungsgemäß mehr Signalisierungsbits und weniger Datenbits beinhalten als die Nachrichten von anderen Teilnehmerstationen.

Gemäß einer anderen Weiterbildung der Erfindung enthält die mindestens eine von der Basisstation an die erste Teilnehmerstation unter Verwendung des ersten Codes gesendete Nachricht ausschließlich Signalisierungsbits. In diesem Fall sind in der mindestens einen Nachricht an die erste Teilnehmerstation keine Datenbits enthalten.

In Ausgestaltung der Erfindung besteht zumindest ein Teil der Signalisierungsbits der mindestens einen an die erste Teilnehmerstation unter Verwendung des ersten Codes gesendeten Nachricht aus besser kanalkodierten Signalisierungsinformationen als zumindest ein Teil der Signalisierungsbits der mindestens einen an die zweite Teilnehmerstation unter Verwendung des zweiten Codes gesendeten Nachricht. Vor der Versendung durch die Basisstation werden Signalisierungsinformationen kanalkodiert. Bei der Kanalkodierung handelt es sich um eine Kodierung, welche den Eigenschaften des Funkübertragungskanals Rechnung trägt. Durch die Kanalkodierung wird die Bitanzahl der Signalisierungsinformationen erhöht, so dass die ursprünglichen Signalisierungsinformationen mit einer größeren Wahrscheinlichkeit vom Empfänger nach der Dekodierung zurückerhalten werden. Eine bessere Kanalkodierung bedeutet somit, dass den ursprünglichen Signalisierungsinformationen bei der Kanalkodierung ein höheres Maß an Redundanz hinzugefügt wird.

Vorteilhaft ist es, wenn die Signalisierungsbits der mindestens einen an die erste Teilnehmerstation unter Verwendung des ersten Codes gesendeten Nachricht und der mindestens einen an die zweite Teilnehmerstation unter Verwendung des zweiten Codes gesendeten Nachricht aus mehreren Typen von Signalisierungsbits bestehen, und die Signalisierungsbits von zumindest einem Typ von Signalisierungsbits der mindestens einen an die erste Teilnehmerstation unter Verwendung des ersten Codes gesendeten Nachricht aus besser kanalkodierten Signalisierungsinformationen bestehen als der oder die entsprechenden Typen von Signalisierungsbits der mindestens einen an die zweite Teilnehmerstation unter Verwendung des zweiten Codes gesendeten Nachricht. Typen von Signalisierungsbits können z.B. sein: Bits zur Leistungsregelung (TPC: Traffic Power Control), Bits zur Anzeige von Formaten (TFCI: Traffic Format Channel Indication), oder auch Pilotbits zur Kanalschätzung. So ist es z.B. möglich, dass die Leistungsregelungsinformationen für der erste Teilnehmerstation vor der Versendung besser kanalkodiert werden als die Leistungsregelungsinformationen für der zweite Teilnehmerstation.

Es ist vorteilhaft, wenn die Basisstation an die erste Teilnehmerstation Datenbits unter Verwendung eines dritten zu dem zweiten Code orthogonalen Codes sendet. Es ist möglich, dass die unter Verwendung des dritten Codes gesendeten Datenbits in einer von dem strukturellen Aufbau der Nachrichten des ersten und des zweiten Codes unterschiedlichen Nachricht gesendet werden, in UMTS zum Beispiel in einer Nachricht in Form eines HSDPA (HSDPA: High Speed Downlink Packet Access) Paketes.

In Ausgestaltung der Erfindung wird das Verfahren während einer Zeitspanne, während welcher eine Verbindung zwischen der Basisstation und der ersten Teilnehmerstation und eine Verbindung zwischen der Basisstation und der zweiten Teilnehmerstation gleichzeitig existieren, auf alle von der Basisstation an die erste Teilnehmerstation im Rahmen der Verbindung zwischen der Basisstation und der ersten Teilnehmerstation unter Verwendung des ersten Codes gesendeten Nachrichten und auf alle von der Basisstation an die zweite Teilnehmerstation im Rahmen der Verbindung zwischen der Basisstation und der zweiten Teilnehmerstation unter Verwendung des zweiten Codes gesendeten Nachrichten angewandt. Vorteilhafterweise existieren die beiden Verbindungen über eine so lange Zeitspanne parallel, dass während diese Zeitspanne eine Mehrzahl von Nachrichten von der Basisstation an die erste und die zweite Teilnehmerstation gesendet wird.

Die oben genannte Aufgabe hinsichtlich der netzseitigen Einrichtung in einem Funkkommunikationssystem wird durch eine netzseitige Einrichtung mit den Merkmalen des Anspruchs 10 gelöst.

Die netzseitige Einrichtung zur Kommunikation mit Teilnehmerstationen umfasst Mittel zum Senden von Nachrichten umfassend Datenbits und Signalisierungsbits an Teilnehmerstationen unter Verwendung von teilnehmerstationsspezifischen Codes, sowie Mittel zum Verwenden eines ersten Codes für Nachrichten an eine erste Teilnehmerstation und eines zweiten zu dem ersten Code nicht-orthogonalen Codes für Nachrichten an eine zweite Teilnehmerstation. Erfindungsgemäß umfasst die netzseitige Einrichtung weiterhin Mittel zum Zusammenstellen von Nachrichten, so dass mindestens eine an die erste Teilnehmerstation unter Verwendung des ersten Codes gesendete Nachricht bei gleicher Gesamtbitanzahl mehr Signalisierungsbits und weniger Datenbits beinhaltet als mindestens eine an die zweite Teilnehmerstation unter Verwendung des zweiten Codes gesendete Nachricht.

Die erfindungsgemäße netzseitige Einrichtung dient insbesondere zur Durchführung des erfindungsgemäßen Verfahrens, wobei dies auch auf die Ausgestaltungen und Weiterbildungen zutrifft. Hierzu kann sie weitere geeignete Mittel aufweisen. Es ist möglich, dass die erfindungsgemäße netzseitige Einrichtung durch eine Mehrzahl von netzseitigen Einrichtungen, welche miteinander verbunden sind und die entsprechenden Mittel aufweisen, realisiert wird.

Im folgenden wird die Erfindung anhand eines Ausführungsbeispiels näher erläutert. Dabei zeigen:
- Figur 1:: ein Funkkommunikationssystem,
- Figur 2:: den strukturellen Aufbau einer Nachricht,
- Figur 3:: Möglichkeiten für den konkreten Aufbau von Nachrichten in Tabellenform.

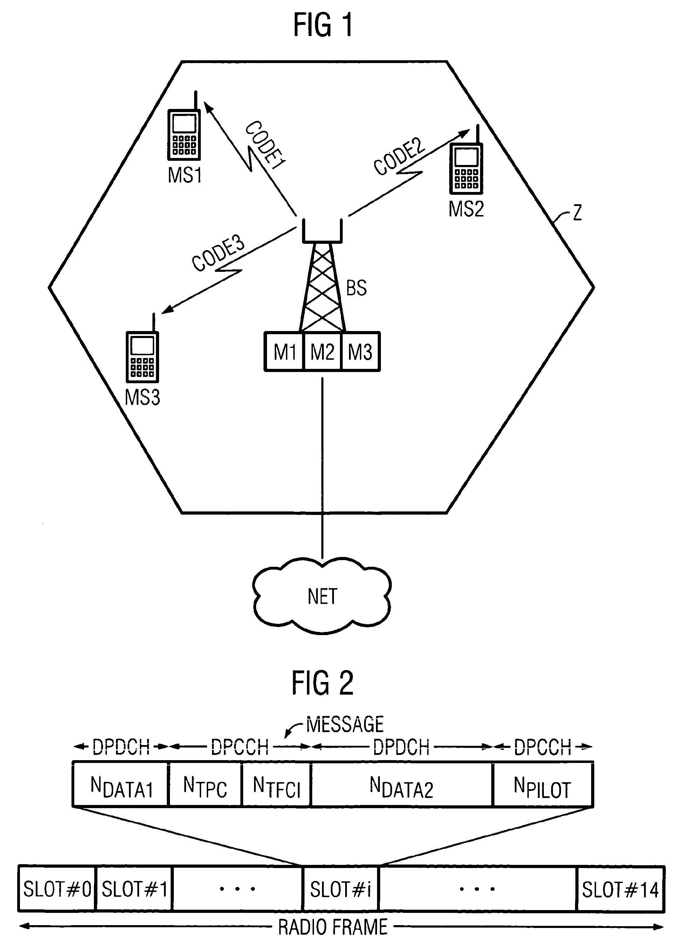

Figur 1 zeigt die Funkzelle Z einer Basisstation BS eines zellularen Funkkommunikationssystems. In der Funkzelle Z halten sich die Mobilstationen MS1, MS2 und MS3 auf, die mit der Basisstation BS über Funk kommunizieren können. Die Basisstation BS ist mit weiteren netzseitigen Einrichtungen des Infrastrukturnetzes NET des Funkkommunikationssystems verbunden. Weitere Basisstationen des Funkkommunikationssystems mit ihren jeweiligen Funkzellen sind der Übersichtlichkeit halber nicht in Figur 1 dargestellt.

Bei dem betrachteten Funkkommunikationssystem handelt es sich um ein System nach dem Standard UMTS, in welchem ein CDMA-Vielfachzugriffsverfahren zur Teilnehmerseparierung verwendet wird. Gemäß dem Standarddokument "3GPP TS 25.213 V 5.5.0: Spreading and Modulation (FDD)" werden in Abwärtsrichtung, d.h. bei der Versendung von Nachrichten von der Basisstation BS zu den Teilnehmerstationen MS1, MS2 und MS3, teilnehmerstationsspezifische Codes eingesetzt, deren Verwendung aus der Kombination der Anwendung eines Channelisation Codes und eines Scrambling Codes besteht. Wie in Figur 1 dargestellt, verwendet die Basisstation BS zur Kommunikation mit der Mobilstation MS1 einen ersten Code CODE1, für die Mobilstation MS2 einen zweiten Code CODE2 und für die Mobilstation MS3 einen dritten Code CODE3.

Den Mobilstationen MS1, MS2 und MS3 ist mit den Codes CODE1, CODE2 und CODE3 jeweils ein dedizierter Kanal zugewiesen, über den Nachrichten von der Basisstation BS übertragen werden können. Wie in Figur 2 dargestellt, sind diese dedizierten Kanäle in der Zeit in Zeitrahmen RADIO FRAME gegliedert, wobei jeder Zeitrahmen RADIO FRAME aus fünfzehn Zeitschlitzen SLOT besteht. Jeder Zeitschlitz SLOT kann zur Versendung einer Nachricht MESSAGE verwendet werden, deren struktureller Aufbau schematisch in Figur 2 dargestellt ist. In einem ersten Feld der Nachricht MESSAGE werden Datenbits N_{DATA1} übertragen. Darauf folgen in einem zweiten Feld die Signalisierungsbits N_{TPC} (TPC: Traffic Power Control), welche Anweisungen des Infrastrukturnetzes an die jeweilige Mobilstation zur Leistungsregelung der von der Mobilstation ausgestrahlten Signale beinhalten. Die daran anschließenden Signalisierungsbits N_{TFCI} (TFCI: Traffic Format Channel Indication) zeigen u.a. die Bitrate, die Art des Dienstes und die Fehlerschutzkodierung an. Sie werden von der Mobilstation zur Verarbeitung der Datenbits nach dem Empfang benötigt. Es folgt ein zweites Feld mit den Datenbits N_{DATA2}. Schließlich beinhaltet die Nachricht MESSAGE weiterhin ein Feld mit den Signalisierungsbits N_{PILOT}, welche von der Mobilstation zur Kanalschätzung eingesetzt werden. Die Datenbits N_{DATA1} und N_{DATA2} werden auf dem DPDCH (Downlink Physical Data Channel) übertragen, und die Signalisierungsbits N_{TPC}, N_{TFCI} und N_{PILOT} auf dem DPCCH (Downlink Physical Control Channel), welche zusammen den dedizierten physikalischen Kanal DPCH (Dedicated Physical Channel) der jeweiligen Mobilstation bilden.

Im folgenden wird davon ausgegangen, dass die Mobilstation MS1 den HSDPA-Dienst des Funkkommunikationssystems nutzt. Hierbei können der Mobilstation Datenpakete mit einer hohen Datenrate übertragen werden. Diese hochratige Datenübertragung wird ermöglicht durch die Verwendung von Modulationsverfahren höherer Ordnung im Zusammenspiel mit Übertragungswiederholungsverfahren, bei denen Übertragungswiederholungen inkrementelle Redundanz enthalten (Hybrid ARQ, Typ II und III). Der zur Übertragung der HSDPA-Daten verwendete physikalische Kanal für den Downlink, der High Speed Physical Downlink Shared Channel (HS-PDSCH), wird zusammen mit einem dedizierten Kanal DPCH betrieben.

Wenn der Nutzer der Mobilstation MS1 über HSDPA Daten aus dem Internet lädt, ohne gleichzeitig einen anderen Dienst wie z.B. eine Sprachkommunikation zu benutzen, benötigt er die Ressourcen seines dedizierten physikalischen Kanals nur in geringem Umfang. Der dedizierte physikalische Kanal wird dann primär dazu verwendet, die Signalisierungsbits von höheren Schichten, wie z.B. von der RRC (Radio Resource Control) Schicht, an die Mobilstation zu senden. Wird für die Mobilstation MS1 ein Code CODE1 verwendet, der orthogonal zu den Codes CODE2 und CODE3 der anderen Mobilstationen MS2 und MS3 der Funkzelle Z ist, so ist eine vollständige Trennung der für die Mobilstationen MS1, MS2 und MS3 bestimmten Nachrichten möglich. Derartige orthogonale Codes stehen jedoch nur in begrenztem Umfang zur Verfügung. Daher entspricht es einer Verschwendung von Funkressourcen, d.h. von orthogonalen Codes, wenn für den kaum genutzten dedizierten physikalischen Kanal der Mobilstation MS1 ein zu den anderen Codes CODE2 und CODE3 orthogonaler Code CODE1 verwendet wird.

Daher wird für den dedizierten physikalischen Kanal der Mobilstation MS1 ein Code CODE1 verwendet, welcher zu den anderen in der Funkzelle Z verwendeten Codes CODE2 und CODE3 nicht orthogonal ist. Dies kann in UMTS realisiert werden, indem für die Mobilstation MS1 anstelle eines Primary Scrambling Codes ein Secondary Scrambling Code eingesetzt wird. Hierbei gilt, dass alle Codes, welche einen Secondary Scrambling Code enthalten, nicht orthogonal sind zu den Codes, welche einen Primary Scrambling Code enthalten. Der durch den Wechsel der Mobilstation MS1 vom Primary zum Secondary Scrambling Code freigewordene zu den anderen Codes CODE2 und CODE3 orthogonale Code kann dann für eine Mobilstation verwendet werden, welche ihren dedizierten physikalischen Kanal in höherem Maße ausnutzt als die Mobilstation MS1.

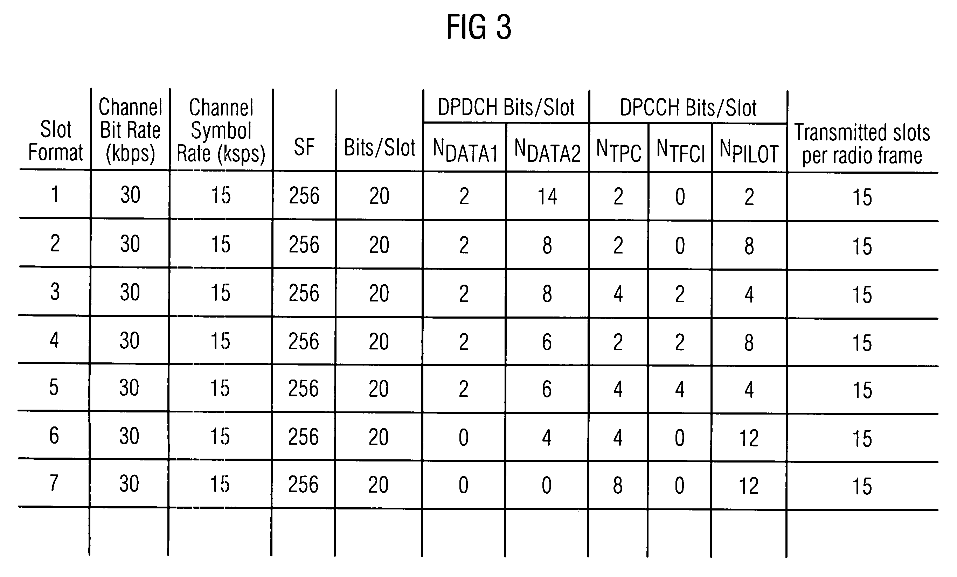

Figur 3 zeigt in Tabellenform verschiedene Slotformate, welche für die Nachricht MESSAGE verwendet werden können. Der Aufbau der Tabelle entspricht den in dem Standarddokument "3GPP TS 25.211 V 5.5.0: Physical channels and mapping of transport channels onto physical channels (FDD)" vorgestellten Slotformaten. Für alle in Figur 3 enthaltenen Slotformate beträgt die Kanalbitrate jeweils 30 kbps (kilobits per second), die Kanalsymbolrate 15 ksps (kilosymbols per second), der Spreizfaktor SF 256, die Anzahl der Bits pro Slot 20, und die Anzahl der übertragenen Slots pro Zeitrahmen (Radio Frame) 15. In den weiteren Spalten ist die Anzahl der Datenbits N_{DATA1} und N_{DATA2} des DPDCH pro Slot und die Anzahl der Signalisierungsbits N_{TPC}, N_{TFCI} und N_{PILOT} des DPCCH pro Slot dargestellt, wobei die Summe aus der Anzahl der Datenbits N_{DATA1} und N_{DATA2} und der Anzahl der Signalisierungsbits N_{TPC}, N_{TFCI} und N_{PILOT} pro Slot jeweils 20, d.h. die Gesamtanzahl der Bits pro Slot, ergibt. Die Anzahl der Bits pro Slot bezieht sich jeweils auf aus der Kanalkodierung hervorgegangene Bits. Die Anzahl der tatsächlich gesendeten Bits entspricht der in der Tabelle enthaltenen Anzahl der Bits pro Slot multipliziert mit dem Spreizfaktor SF, welcher in der Tabelle jeweils 256 beträgt.

Während in den folgenden Ausführungen Bezug genommen wird auf die Tabelle der Figur 3, ist das beschriebene Verfahren auch anwendbar auf Slot Formate, bei denen die in der Tabelle der Figur 3 fixen Größen Channel Bit Rate, Channel Symbol Rate, SF, Bits/Slot, Transmitted slots per radio frame, und auch die Anzahl der Daten- und Signalisierungsbits pro Slot andere Zahlenwerte aufweisen. Auch auf Nachrichtenformate, die sich von den das Slot Format der Figur 3 charakterisierenden Größen unterscheiden, ist die Erfindung anwendbar.

Erfindungsgemäß sind die Nachrichten MESSAGE an die Mobilstation MS1 so aufgebaut, dass die Gesamtanzahl der Signalisierungsbits pro Slot, d.h. die Summe aus der Anzahl der Signalisierungsbits N_{TPC}, N_{TFCI} und N_{PILOT} pro Slot, größer ist als die Gesamtanzahl der Signalisierungsbits pro Slot für die Mobilstationen MS2 und MS3, während die Gesamtanzahl der Datenbits pro Slot, d.h. die Summe aus der Anzahl der Datenbits N_{DATA1} und N_{DATA2} pro Slot, für die Mobilstation MS1 kleiner ist als für die Mobilstationen MS2 und MS3. Dementsprechend ist es z.B. möglich, für die Mobilstationen MS2 und MS3 das Slotformat 1 zu verwenden, während für die Mobilstation MS1 eines der Slotformate 2 bis 7 verwendet wird. Werden für die Mobilstationen MS2 und MS3 die Slotformate 2 oder 3 verwendet, so kann für die Mobilstation MS1 eines der Slotformate 4 bis 7 verwendet werden.

Wird für die Mobilstation MS1 das Slotformat 7 verwendet, so werden in den Nachrichten MESSAGE der Figur 2 keine Datenbits N_{DATA1} und N_{DATA2} an die Mobilstation MS1 gesendet, die Gesamtanzahl der Bits pro Slot bzw. pro Nachricht MESSAGE wird ausschließlich für die Versendung der Signalisierungsbits N_{TPC}, N_{TFCI} und N_{PILOT} eingesetzt . In diesem Fall ist keine Versendung von Signalisierungsbits N_{TFCI} nötig, da die Signalisierungsbits N_{TFCI} anzeigen, wie die verschiedenen Transportkanäle, welche Bits für die Datenbits N_{DATA1} und N_{DATA2} beitragen, im Empfänger gedemultiplext werden können. Dadurch stehen mehr Bits pro Slot für die Signalisierungsbits N_{TPC} und N_{PILOT} zur Verfügung, welche somit noch besser von der Mobilstation dekodiert werden können. Auch in den Fällen, dass Datenbits N_{DATA1} und N_{DATA2} übertragen werden, kann gegebenenfalls, wie bei den Slot Formaten 1 und 2, auf die Versendung der Signalisierungsbits N_{TFCI} verzichtet werden. Die Verwendung von Signalisierungsbits N_{TFCI} ist optional, und insbesondere dann, wenn die Anzahl der Transportkanäle und deren Kombinationen gering ist, muss der jeweiligen Mobilstation kein TFCI-Wert signalisiert werden.

Eine Vielzahl an weiteren Zuordnungen der Slotformate gemäß der Tabelle zu den Mobilstationen MS1, MS2 und MS3 ist gemäß der Erfindung möglich, solange gilt, dass aufgrund des für die Mobilstation MS1 verwendeten Slotformats in den Nachrichten an die Mobilstation MS1 weniger Datenbits und mehr Signalisierungsbits enthalten sind als in den Nachrichten an die Mobilstation MS2 und/oder an die Mobilstation MS3. Am vorteilhaftesten ist es, wenn die Slotformate für die Mobilstationen netzseitig so gewählt werden, dass die Nachrichten des dedizierten Kanals der Mobilstation MS1 weniger Datenbits und mehr Signalisierungsbits enthalten als die Nachrichten der dedizierten Kanäle aller Mobilstationen, deren Code für den dedizierten Kanal nicht-orthogonal zu dem Code des dedizierten Kanals der Mobilstation MS1 ist und deren Nachrichten die gleiche Gesamtbitanzahl enthalten wie die Nachrichten für die Mobilstation MS1. Es ist auch möglich, dass zusätzlich zur Mobilstation MS1 auch anderen Mobilstationen ein zu manchen Codes von anderen Mobilstationen der gleichen Funkzelle nicht-orthogonaler Code für den dedizierten Kanal zugewiesen wird, der jedoch orthogonal zum Code der Mobilstation MS1 ist. Für diese anderen Mobilstationen gelten die Ausführungen bezüglich der Mobilstation MS1 entsprechend. So ist es möglich, für alle Nutzer des HSDPA-Dienstes, oder zumindest für diejenigen, die aktuell ausschließlich Daten über HSDPA empfangen wollen, wie in Bezug auf die Mobilstation MS1 beschrieben vorzugehen.

Dadurch, dass für die Mobilstation MS1 mehr Signalisierungsbits N_{TPC}, N_{TFCI} und N_{PILOT} im Vergleich zu den Mobilstationen MS2 und MS3 zur Verfügung stehen, kann die Signalisierungsinformation für die Mobilstation MS1 besser kanalkodiert werden als die entsprechende Signalisierungsinformation für die Mobilstationen MS2 und MS3, so dass die Mobilstation MS1 diese zuverlässiger detektieren und dekodieren kann. Infolge dessen ist es möglich, dass die Basisstation die Sendeleistung für die Signalisierungsbits N_{TPC}, N_{TFCI} und N_{PILOT} der Mobilstation MS1 reduziert, so dass diese bei z.B. gleichem Abstand der Mobilstationen MS1, MS2 und MS3 von der Basisstation BS mit einer geringeren Sendeleistung ausgestrahlt werden als die Signalisierungsbits N_{TPC}, N_{TFCI} und N_{PILOT} und die Datenbits N_{DATA1} und N_{DATA2} der Mobilstationen MS2 und MS3. Dadurch werden die Störungen, welche durch die Versendung von Nachrichten an die Mobilstation MS1 unter Verwendung eines zu den Codes der Mobilstationen MS2 und MS3 nicht-orthogonalen Codes für die Nachrichten der Mobilstationen MS2 und MS3 entstehen, verringert. Somit benötigen die Mobilstationen MS2 und MS3 trotz der Tatsache, dass für den dedizierten Kanal der Mobilstation MS1 ein zu ihrem Code nicht-orthogonaler Code verwendet wird, keine bessere Codierung ihrer Signalisierungsbits N_{TPC}, N_{TFCI} und N_{PILOT}. Da zwischen den Sendeleistung des DPDCH und des DPCCH eine festgelegte Differenz besteht, wird mit der Sendeleistung für die Signalisierungsbits N_{TPC}, N_{TFCI} und N_{PILOT} auch die Sendeleistung für die Datenbits N_{DATA1} und N_{DATA2} reduziert.

Von Vorteil bei der beschriebenen Vorgehensweise ist, dass für einen Teilnehmer, welcher Daten über HSDPA empfängt, kein neuer Kanal zur Übermittlung der notewendigen Signalisierungsinformationen eingerichtet werden muss. Vielmehr wird der ohnehin aufgebaute dedizierte physikalische Kanal des Teilnehmers zur Übertragung der Signalisierungsinformationen verwendet, und zwar unter Verwendung eines zu den Codes der dedizierten Kanäle, welche in größerem Umfang zur Datenübertragung eingesetzt werden, nicht-orthogonalen Codes. Hierdurch ist es möglich, einen weiteren zu den anderen Codes der dedizierten Kanäle, welche in größerem Umfang zur Datenübertragung eingesetzt werden, orthogonalen Code für einen Teilnehmer einzusetzen, welcher seinen dedizierten Kanal in größerem Umfang zur Datenübertragung verwendet.

Die Schritte des oben beschriebenen Verfahrens werden durch die Basisstation BS der Figur 1 und/oder durch eine geeignete mit ihr verbundene Einrichtung des Infrastrukturnetzes durchgeführt. Hierzu weist die Basisstation BS Mittel M1 zum Senden von Nachrichten unter Verwendung von teilnehmerspezifischen Codes auf, realisierbar durch geeignete Funkantennen. Weiterhin sind in der Basisstation BS Mittel M2 zum Verwenden von orthogonalen und nicht-orthogonalen Codes für Nachrichten an Mobilstationen vorgesehen. Mit den Mitteln M2 werden die Bits der Nachrichten mit den der jeweiligen Mobilstation zugewiesenen Codes bearbeitet, z.B. multipliziert. Die Mitteln M3 dienen dem Zusammenstellen von Nachrichten, so dass diese entsprechend der Figur 3 aufgebaut sind. Dies kann realisiert werden durch einen Multiplexer, der die jeweilige Anzahl an Daten- und Signalisierungsbits in eine Nachricht zusammenstellt.

## Patentansprüche

1. Verfahren zur Kommunikation per Funk zwischen einer Basisstation (BS) und Teilnehmerstationen (MS1, MS2, MS3) eines Funkkommunikationssystems,
wobei von der Basisstation (BS) an Teilnehmerstationen (MS1, MS2, MS3) unter Verwendung von teilnehmerstationsspezifischen Codes (CODE1, CODE2, CODE3) Nachrichten (MESSAGE) umfassend Datenbits (N_{DATA1}, N_{DATA2}) und/oder Signalisierungsbits (N_{TPC}, N_{TFCI}, N_{PILOT}) gesendet werden,
wobei gleichzeitig für Nachrichten (MESSAGE) an eine erste Teilnehmerstation (MS1) ein erster Code (CODE1) und für Nachrichten (MESSAGE) an eine zweite Teilnehmerstation (MS2, MS3) ein zweiter zu dem ersten Code (CODE1) nicht-orthogonaler Code (CODE2, CODE3) verwendet wird,
**dadurch gekennzeichnet,**
**dass** mindestens eine von der Basisstation (BS) an die erste Teilnehmerstation (MS1) unter Verwendung des ersten Codes (CODE1) gesendete Nachricht (MESSAGE) bei gleicher Gesamtbitanzahl mehr Signalisierungsbits (N_{TPC}, N_{TFCI}, N_{PILOT}) und weniger Datenbits (N_{DATA1}, N_{DATA2}) beinhaltet als mindestens eine von der Basisstation (BS) an die zweite Teilnehmerstation (MS2, MS3) unter Verwendung des zweiten Codes (CODE2, CODE3) gesendete Nachricht (MESSAGE).

2. Verfahren nach Anspruch 1,
**dadurch gekennzeichnet,**
**dass** der erste Code (CODE1) einer von der Basisstation (BS) aktuell weniger verwendeten Gruppe von Codes und der zweite Code (CODE2, CODE3) einer von der Basisstation (BS) aktuell mehr verwendeten Gruppe von Codes angehört.

3. Verfahren nach Anspruch 1 oder 2,
**dadurch gekennzeichnet,**
**dass** die Verwendung des ersten Codes (CODE1) die Anwendung eines ersten Scrambling Codes und die Verwendung des zweiten Codes (CODE2, CODE3) die Anwendung eines zweiten von dem ersten Scrambling Code unterschiedlichen Scrambling Codes umfasst.

4. Verfahren nach einem der Ansprüche 1 bis 3,
**dadurch gekennzeichnet,**
**dass** die mindestens eine von der Basisstation (BS) an die erste Teilnehmerstation (MS1) unter Verwendung des ersten Codes (CODE1) gesendete Nachricht (MESSAGE) ausschließlich Signalisierungsbits (N_{TPC}, N_{TFCI}, N_{PILOT}) enthält.

5. Verfahren nach einem der Ansprüche 1 bis 4,
**dadurch gekennzeichnet,**
**dass** zumindest ein Teil der Signalisierungsbits (N_{TPC}, N_{TFCI}, N_{PILOT}) der mindestens einen an die erste Teilnehmerstation (MS1) unter Verwendung des ersten Codes (CODE1) gesendeten Nachricht (MESSAGE) aus besser kanalkodierten Signalisierungsinformationen besteht als zumindest ein Teil der Signalisierungsbits (N_{TPC}, N_{TFCI}, N_{PILOT}) der mindestens einen an die zweite Teilnehmerstation (MS2, MS3) unter Verwendung des zweiten Codes (CODE2, CODE3) gesendeten Nachricht (MESSAGE).

6. Verfahren nach einem der Ansprüche 1 bis 5,
**dadurch gekennzeichnet,**
**dass** die Signalisierungsbits (N_{TPC}, N_{TFCI}, N_{PILOT}) der mindestens einen an die erste Teilnehmerstation (MS1) unter Verwendung des ersten Codes (CODE1) gesendeten Nachricht (MESSAGE) und der mindestens einen an die zweite Teilnehmerstation (MS2, MS3) unter Verwendung des zweiten Codes (CODE2, CODE3) gesendeten Nachricht aus mehreren Typen von Signalisierungsbits (N_{TPC}, N_{TFCI}, N_{PILOT}) bestehen, und
**dass** die Signalisierungsbits (N_{TPC}, N_{TFCI}, N_{PILOT}) von zumindest einem Typ von Signalisierungsbits (N_{TPC}, N_{TFCI}, N_{PILOT}) der mindestens einen an die erste Teilnehmerstation (MS1) unter Verwendung des ersten Codes (CODE1) gesendeten Nachricht (MESSAGE) aus besser kanalkodierten Signalisierungsinformationen bestehen als der oder die entsprechenden Typen von Signalisierungsbits (N_{TPC}, N_{TFCI}, N_{PILOT}) der mindestens einen an die zweite Teilnehmerstation (MS2, MS3) unter Verwendung des zweiten Codes (CODE2, CODE3) gesendeten Nachricht (MESSAGE).

7. Verfahren nach einem der Ansprüche 1 bis 6,
**dadurch gekennzeichnet,**
**dass** die Basisstation (BS) an die erste Teilnehmerstation (MS1) Datenbits (N_{DATA1}, N_{DATA2}) unter Verwendung eines dritten zu dem zweiten Code (CODE2, CODE3) orthogonalen Codes sendet.

8. Verfahren nach Anspruch 7,
**dadurch gekennzeichnet,**
**dass** es sich bei dem dritten Code um einen Code eines HSDPA (High Speed Downlink Packet Access) Kanals handelt.

9. Verfahren nach einem der Ansprüche 1 bis 8,
**dadurch gekennzeichnet,**
**dass** das Verfahren während einer Zeitspanne, während welcher eine Verbindung zwischen der Basisstation (BS) und der ersten Teilnehmerstation (MS1) und eine Verbindung zwischen der Basisstation (BS) und der zweiten Teilnehmerstation (MS2, MS3) gleichzeitig existieren, auf alle von der Basisstation (BS) an die erste Teilnehmerstation (MS1) im Rahmen der Verbindung zwischen der Basisstation (BS) und der ersten Teilnehmerstation (MS1) unter Verwendung des ersten Codes (CODE1) gesendeten Nachrichten (MESSAGE) und auf alle von der Basisstation (BS) an die zweite Teilnehmerstation (MS2, MS3) im Rahmen der Verbindung zwischen der Basisstation (BS) und der zweiten Teilnehmerstation (MS2, MS3) unter Verwendung des zweiten Codes (CODE2, CODE3) gesendeten Nachrichten (MESSAGE) angewandt wird.

10. Netzseitige Einrichtung (BS) in einem Funkkommunikationssystems zur Kommunikation mit Teilnehmerstationen (MS1, MS2, MS3), umfassend:
Mittel (M1) zum Senden von Nachrichten (MESSAGE) umfassend Datenbits (N_{DATA1}, N_{DATA2}) und Signalisierungsbits (N_{TPC}, N_{TFCI}, N_{PILOT}) an Teilnehmerstationen (MS1, MS2, MS3) unter Verwendung von teilnehmerstationsspezifischen Codes (CODE1, CODE2, CODE3),
Mittel (M2) zum Verwenden eines ersten Codes (CODE1) für Nachrichten (MESSAGE) an eine erste Teilnehmerstation (MS1) und eines zweiten zu dem ersten Code (CODE1) nicht-orthogonalen Codes (CODE2, CODE3) für Nachrichten (MESSAGE) an eine zweite Teilnehmerstation (MS2, MS3),
**dadurch gekennzeichnet,**
**dass** die netzseitige Einrichtung (BS) weiterhin umfasst:
Mittel (M3) zum Zusammenstellen von Nachrichten (MESSAGE), so dass mindestens eine an die erste Teilnehmerstation (MS1) unter Verwendung des ersten Codes (CODE1) gesendete Nachricht (MESSAGE) bei gleicher Gesamtbitanzahl mehr Signalisierungsbits (N_{TPC}, N_{TFCI}, N_{PILOT}) und weniger Datenbits (N_{DATA1}, N_{DATA2}) beinhaltet als mindestens eine an die zweite Teilnehmerstation (MS2, MS3) unter Verwendung des zweiten Codes (CODE2, CODE3) gesendete Nachricht (MESSAGE).
